# EUROPEAN PATENT APPLICATION

(11) **EP 2 551 536 A2**
(43) Date of publication of application: **30.01.2013**
(21) Application number: 12174873.5
(22) Date of filing: 04.07.2012
(51) Int. Cl.: F16C 11/06

(54) **Ball joint mount structure and ball joint mounting method**

(30) Priority: 25.07.2011 JP 2011162385; 25.07.2011 JP 2011162386
(71) Applicant: JTEKT CORPORATION, Osaka-shi Osaka 542-8502 (JP)
(72) Inventor: Ikeda, Tetsuo, Osaka-shi, Osaka 542-8502 (JP); Tomiyama, Hiromitsu, Osaka-shi, Osaka 542-8502 (JP)
(74) Representative: Winter, Brandl, Fürniss, Hübner, Röss, Kaiser, Polte - Partnerschaft

(57) **Abstract**

It is an object of the present invention to provide a ball joint mount structure and a ball joint mounting method, which can distribute grease between an outer periphery of a shaft and a sliding contact surface of a lip while preventing the grease from being supplied into a mount hole. The inventive ball joint mount structure includes a grease retaining groove (55) provided in a portion of a lower surface (52b) of a knuckle arm (51) spaced a distance from a peripheral edge of a knuckle hole (53) for retaining grease (G). After a shaft (12) is inserted into the knuckle hole (53) to bring an upper end portion (5a) into contact with the lower surface (52b) with the grease (G) retained in the grease retaining groove (55), the ball stud (4) is fixed to the knuckle arm (51).

## Description

### TECHNICAL FIELD

The present invention relates to a ball joint mount structure and a ball joint mounting method for mounting a ball joint on a mount member.

### BACKGROUND ART

A ball joint (so-called outer ball joint) is provided, for example, in a connection portion between a knuckle arm of a suspension system and a steering system for supporting the knuckle arm in a vertically movable and turnable manner. The ball joint includes a metal ball stud having a round head provided at a proximal end of a shaft, a bottomed cylindrical housing accommodating the round head therein with the shaft projecting from an opening thereof, a synthetic resin sheet provided between the housing and the round head, and a tubular rubber boot attached to the housing (see, for example, JP-2008-128351-A). The ball stud is pivotal about the round head with respect to the housing, and rotatable about a center axis of the shaft.

The boot covers the opening of the housing, and is fitted around an intermediate portion of the shaft at one of opposite ends thereof and fitted around an open end portion of the housing (formed with the opening) at the other end thereof. The one end of the boot has a lip which is kept in resilient contact with an outer periphery of the shaft of the ball stud.

The ball joint is mounted in a planar mount portion of the knuckle arm. The mount portion of the knuckle arm to be mounted with the ball joint has a knuckle hole extending therethrough. The shaft of the ball stud is inserted in the knuckle hole, and then a male-thread distal end portion of the shaft projecting rearward of the knuckle arm is brought into threading engagement with a nut, which is in turn tightened. Thus, the ball stud is fixed to the knuckle arm, whereby the ball joint is mounted on the knuckle arm.

### SUMMARY OF INVENTION

### TECHNICAL PROBLEM

In recent years, there has been a demand for further enhancement of the sealability of the boot.

The inventors of the present invention contemplate that the sealability of the boot is enhanced by increasing the tightness of the boot as compared with the prior art. If the boot is highly tight, however, the pressure of the contact between the outer periphery of the shaft and the lip is increased, resulting in abnormal abrasion of the lip.

A conceivable approach to enhancement of lubrication between the outer periphery of the shaft and the lip is to provide grease or the like between a sliding contact surface of the lip and the outer periphery of the shaft. In this case, however, grease adhering to the outer periphery of the shaft is liable to be drawn into the mount hole when the shaft is inserted into the mount hole in the mounting of the ball joint. That is, the grease is liable to be supplied not only between the outer periphery of the shaft and the sliding contact surface of the lip but also into the mount hole. When the grease is supplied into the mount hole, an engagement force between the nut and the shaft is liable to be changed, thereby adversely influencing the ball joint in various ways.

It is an object of the present invention to provide a ball joint mount structure and a ball joint mounting method, which can distribute the grease between the outer periphery of the shaft and the sliding contact surface of the lip while preventing the grease from being supplied into the mount hole.

It is another object of the present invention to provide a ball joint mount structure which can prevent the grease from being supplied into the mount hole even if the grease is applied onto at least one of the lip and the outer periphery of the shaft before the mounting of the ball joint.

### SOLUTION TO PROBLEM

According to an inventive aspect of claim 1, there is provided a ball joint mount structure, which includes: a ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof; and a mount member (51) having a mount surface (52b) and a mount hole (53) opening in the mount surface; the ball joint being mounted on the mount member with the shaft inserted in the mount hole and engaged with the mount member; the boot including an annular lip (5a) provided at the one end thereof with an inner peripheral surface (32) of the lip in contact with an outer periphery of the shaft and with one end face (33) of the lip in contact with the mount surface; the mount member including a grease retaining portion (55; 55A; 55B; 60) provided in a portion of the mount surface thereof spaced a distance (S) from a peripheral edge of the mount hole as opposed to the one end face of the lip for retaining grease (G).

Parenthesized alphanumeric characters respectively denote corresponding components to be described in the following embodiments, but are not intended to limit the scope of the invention to these embodiments. This definition is applied to the following description in this section.

With this arrangement, the grease retaining portion for retaining the grease is provided in the portion of the mount surface spaced the distance from the peripheral edge of the mount hole as opposed to the one end face of the lip. After the grease is retained in the grease retaining portion, the shaft is inserted in the mount hole.

At this time, no grease is present on a portion of the mount surface adjacent to an opening of the mount hole. Therefore, the grease is hardly drawn into the mount hole during the insertion of the shaft into the mount hole. When the one end face of the lip is brought into contact with the mount surface by the insertion of the shaft, the grease is spread between the lip and the mount surface to reach the outer periphery of the shaft.

After the mounting of the ball joint, the lip is slid around the shaft of the ball stud as the ball stud is pivoted and rotated. Thus, the grease reaching the outer periphery of the shaft is distributed (infiltrates) between the inner peripheral surface of the lip and the outer periphery of the shaft.

On the other hand, the ball stud is not relatively displaced with respect to the mount member. Therefore, the grease reaching the outer periphery of the shaft hardly moves toward an inner side of an interior wall of the mount hole. This makes it possible to distribute the grease between the outer periphery of the shaft and the inner peripheral surface of the lip while preventing the grease from being supplied into the mount hole.

According to an inventive aspect of claim 2, the grease retaining portion may include an annular groove (55; 55A; 55B) surrounding the mount hole.

According to an inventive aspect of claim 3, the grease retaining portion may include a plurality of recesses (60) provided around the mount hole.

According to an inventive aspect of claim 4, there is provided a ball joint mounting method for mounting a ball joint (1) on a mount member (51), the ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof to cover the opening, the boot including a lip (5a) provided at the one end thereof in resilient contact with an outer periphery of the shaft, the mount member (51) having a mount surface (52b) and a mount hole (53) opening in the mount surface, the method comprising: a grease putting step of putting grease (G) in a grease retaining portion (55; 55A; 55B; 60) provided in a portion of the mount surface spaced a distance (S) from a peripheral edge of the mount hole; a shaft inserting step of inserting the shaft into the mount hole to bring the lip into contact with the mount surface after the grease putting step; and a shaft fixing step of fixing the shaft inserted into the mount hole to the mount member after the shaft inserting step.

The inventive method provides the same effects as described with respect to claim 1.

According to an inventive aspect of claim 5, there is provided a ball joint mount structure, which includes: a ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof; and a mount member (51) having a mount surface (52b) and a mount hole (53) opening in the mount surface; the ball joint being mounted on the mount member with the shaft inserted in the mount hole and engaged with the mount member; the boot including an annular lip (5a) provided at the one end thereof with an inner peripheral surface (32) of the lip in contact with an outer periphery of the shaft and with one end face (33) of the lip in contact with the mount surface; wherein grease (G) is supplied between the inner peripheral surface of the lip and the outer periphery of the shaft, and an annular seal member (70) is provided in an interior wall (54) of an opening (56) of the mount hole in contact with the outer periphery of the shaft for suppressing intrusion of the grease.

With this arrangement, the annular seal member is provided on the interior wall of the opening of the mount hole. When the shaft is inserted into the mount hole, the annular seal member is brought into contact with the outer periphery of the shaft to scrape grease adhering to the outer periphery of the shaft from the outer periphery of the shaft. Therefore, the grease adhering to the outer periphery of the shaft is hardly drawn into the mount hole. Further, the annular seal member is kept in contact with the outer periphery of the shaft to prevent the grease from intruding into the mount hole after the insertion of the shaft in the mount hole. Thus, the intrusion of the grease in the mount hole can be prevented even if the grease is applied onto at least one of the lip and the outer periphery of the shaft before the mounting.

According to an inventive aspect of claim 6, a step (80) may be provided in the interior wall of the opening of the mount hole to accommodate the seal member.

According to an inventive aspect of claim 7, an annular groove (80A) is provided in the interior wall of the opening of the mount hole to accommodate the seal member.

According to an inventive aspect of claim 8, the grease may be supplied between the one end face of the lip and the mount surface.

### BRIEF DESCRIPTION OF DRAWINGS

FIG. 1 is a partial sectional view illustrating major portions of a ball joint and a knuckle arm of a ball joint mount structure according to one embodiment of the present invention.
FIG. 2 is an enlarged partial sectional view of the ball joint and the knuckle arm shown in FIG. 1.
FIG. 3 is a diagram of the knuckle arm as seen in an arrow direction III in FIG. 2.
FIG. 4A is a sectional view for explaining an exemplary method for mounting the ball joint on the knuckle arm.
FIG. 4B is another sectional view for explaining the exemplary method for mounting the ball joint on the knuckle arm.
FIG. 5 is a major sectional view of a knuckle arm of a first modification of the ball joint mount structure.
FIG. 6 is a major sectional view of a knuckle arm of a second modification of the ball joint mount structure.
FIG. 7 is a major sectional view of a knuckle arm of a ball joint mount structure according to another embodiment of the present invention.
FIG. 8 is a partial sectional view illustrating major portions of a ball joint and a knuckle arm of a ball joint mount structure according to further another embodiment of the present invention.
FIG. 9 is a sectional view for explaining how to mount the ball joint on the knuckle arm.
FIG. 10 is a major sectional view of a knuckle arm of a ball joint mount structure according to still another embodiment of the present invention.

### DESCRIPTION OF EMBODIMENTS

Embodiments of the present invention will hereinafter be described in detail with reference to the attached drawings.

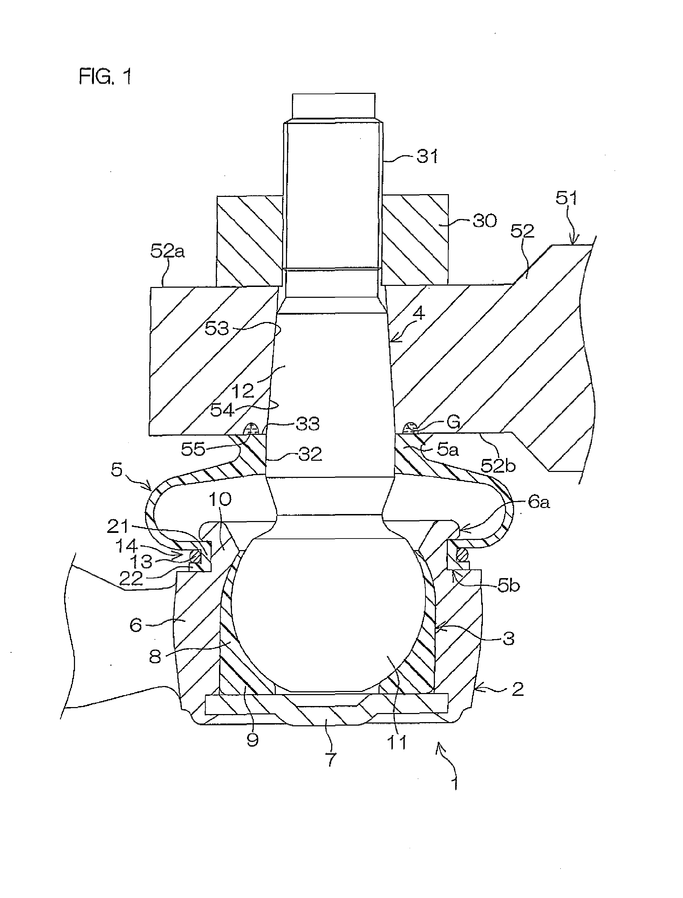

FIG. 1 is a diagram showing the major structures of a ball joint 1 and a knuckle arm 51 of a ball joint mount structure according to one embodiment of the present invention. FIG. 1 illustrates a state after the ball joint 1 is mounted on the knuckle arm 51. The mount structure according to this embodiment is such that a ball joint 1 provided in a connection portion between a knuckle arm 51 of a suspension system and a steering system is mounted on the knuckle arm 51 (mount member). The ball joint 1 supports the knuckle arm 51 in a vertically movable and turnable manner.

The knuckle arm 51 includes a knuckle body (not shown) such as of aluminum, and a bracket 52 of aluminum connected to a lower portion of the knuckle body. The bracket 52 has a knuckle hole (mount hole) 53 provided at a mount position in a planar portion thereof (mount portion, which is one end portion (right end portion in FIG. 1) in this embodiment) as extending from an upper surface 52a to a lower surface 52b thereof. In other words, the knuckle hole 53 opens in the lower surface (mount surface) 52b. The knuckle hole 53 is an insertion hole though which a ball stud shaft 12 is inserted, and has a generally cylindrical peripheral wall (interior wall) 54. The peripheral wall 54 has a taper shape which has a diameter increasing toward a lower end thereof.

The ball joint 1 includes a tubular housing 2, a resin sheet 3 and a ball stud 4 retained in the housing 2, and a tubular boot 5 attached to the housing 2. The housing 2 includes a tubular member 6 in which the resin sheet 3 is disposed, and a plug plate 7 fixed to a lower end of the tubular member 6 to close the lower end of the tubular member 6. The tubular member 6 has an upper end portion which is defined as an open end portion 6a.

The resin sheet 3 has a cup shape, and includes a tubular peripheral wall portion 8 and a bottom portion 9 provided at a lower end of the peripheral wall portion 8. The resin sheet 3 is disposed with its peripheral wall portion 8 fitted on an inner peripheral surface of the tubular member 6 and with its bottom portion 9 opposed to the plug plate 7. The resin sheet 3 is held between an annular flange 10 provided at the open end portion 6a and the plug plate 7. The flange 10 has an inner diameter that is smaller than the outer diameter of a part (a round head 11 to be described later) of the ball stud 4. Therefore, the open end portion 6a prevents the part of the ball stud 4 and the resin sheet 3 from being withdrawn from the tubular member 6.

The ball stud 4 is a metal member which integrally includes a round head 11 having a spherical outer peripheral surface and a shaft 12 projecting upward from the round head 11. The round head 11 is disposed with its center aligning on a center axis of the shaft 12. The shaft 12 has a male thread portion 31 provided at a distal end thereof. The round head 11 is covered with the resin sheet 3 in the tubular member 6, and the shaft 12 projects from the open end portion 6a of the tubular member 6. The round head 11 except for a portion thereof adjacent to the shaft 12 is mostly covered with the resin sheet 3. The round head 11 is retained in the housing 2 with the resin sheet 3 interposed between the round head 11 and the housing 2.

The resin sheet 3 has an inner peripheral surface conformal to the outer peripheral surface of the round head 11. Grease is filled between the resin sheet 3 and the round head 11. The round head 11 is slidable with respect to the resin sheet 3. The ball stud 4 is pivotal about the round head 11 with respect to the housing 2. The ball stud 4 is rotatable about the center axis of the shaft 12.

The boot 5 is configured in a tubular shape such that an upper end portion (one end, lip) 5a thereof has a smaller diameter than a lower end portion (the other end) 5b thereof, and an intermediate portion thereof is bulged outward from the lower end portion 5b. The boot 5 is made of a resilient material (e.g., a chloroprene rubber (CR), an acrylonitrile butadiene rubber (NBR), a natural rubber or the like). The upper end portion 5a of the boot 5 is fitted around an intermediate portion of the shaft 12 in resilient contact with an outer periphery of the shaft 12. In a state shown in FIG. 1, the upper end portion 5a of the boot 5 also contacts the lower surface 52b. The lower end portion 5b of the boot 5 is fitted around the open end portion 6a of the tubular member 6.

The lower end portion 5b of the boot 5 is fixed to the tubular member 6 by a fixture ring 13 attached to the lower end portion 5b. More specifically, the housing 2 has an annular groove 14 circumferentially provided in an outer periphery of the open end portion 6a thereof for attachment of the boot. An opening defined within the open end portion 6a is covered with the boot 5, whereby foreign matter such as water and dust is prevented from intruding into the ball joint 1.

The lower end portion 5b of the boot 5 is inserted in the annular groove 14. The lower end portion 5b includes a cylindrical portion 21, and an annular turn-back portion 22 turned back from a distal edge of the cylindrical portion 21 as extending outward. The cylindrical portion 21 has an axial length that is substantially equal to the width of the annular groove 14, and is disposed in the annular groove 14 with its inner peripheral surface in intimate contact with a bottom of the annular groove 14. The fixture ring 13 is a resilient member, for example, having a C-shape as seen in plan. The fixture ring 13 is fitted around the cylindrical portion 21 in the annular groove 14 to clamp the cylindrical portion 21 from the outer side to fix the cylindrical portion 21 to the tubular member 6.

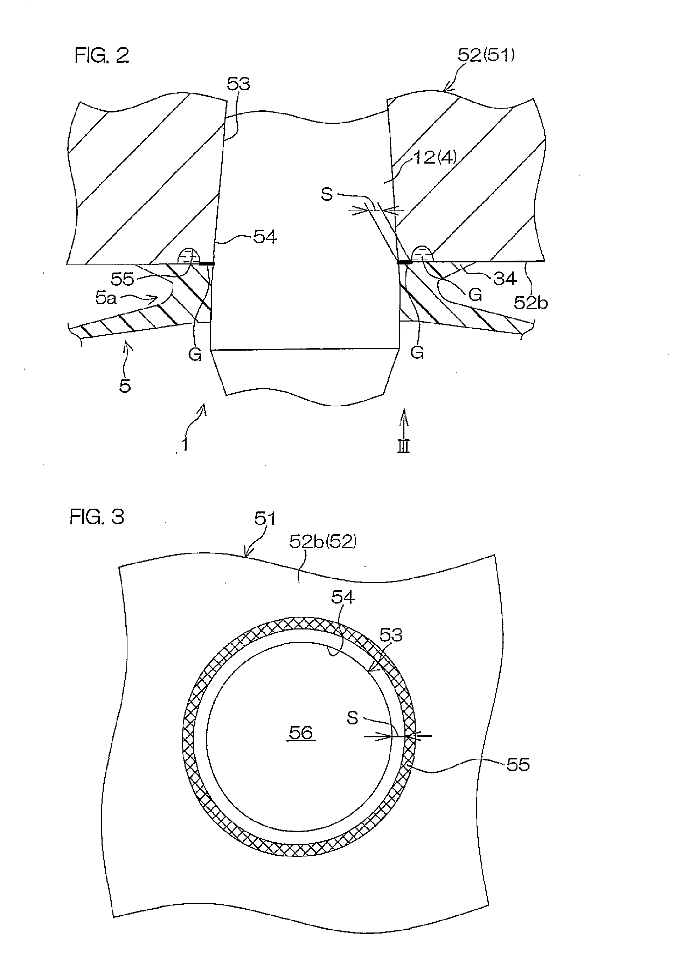

FIG. 2 is an enlarged partial sectional view of the ball joint 1 and the knuckle arm 51. Reference will hereinafter be made to FIGS. 1 and 2.

The upper end portion 5a of the boot 5 is generally cylindrical. The upper end portion 5a has a generally cylindrical first sliding contact surface (inner peripheral surface) 32 kept in sliding contact with the outer periphery of the shaft 12, and an annular second sliding contact surface (one end face) 33 kept in sliding contact with the lower surface 52b in the state shown in FIG. 1. The first sliding contact surface 32 is entirely kept in sliding contact with the outer periphery of the shaft 12.

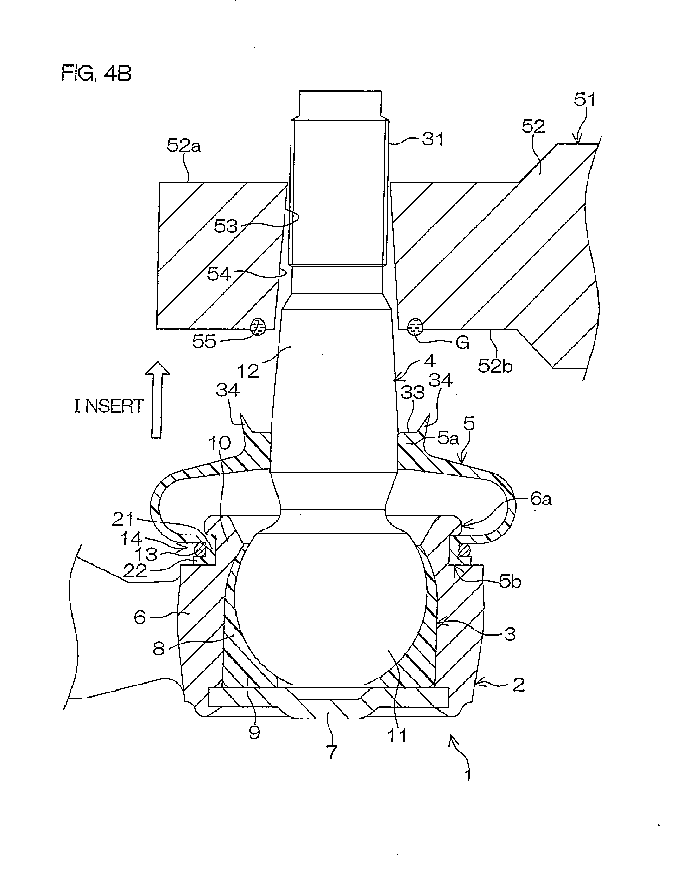

The second sliding contact surface 33 defines an upper end face of the upper end portion 5a. The second sliding contact surface 33 is continuous to the first sliding contact surface 32, and generally perpendicular to the first sliding contact surface 32. With the ball joint 1 mounted on the knuckle arm 51 as shown in FIG. 1, the second sliding contact surface 33 is pressed against the lower surface 52b to be deformed. More specifically, as shown in FIG. 4B to be described later, the second sliding contact surface 33 includes an annular projection 34 provided along an outer periphery thereof as projecting away from the housing 2. In the state shown in FIG. 1, the annular projection 34 kept in contact with the lower surface 52b is pressed against the lower surface 52b to project outward (see FIG. 2, though the annular projection 34 is not shown in FIG. 1).

The first sliding contact surface 32 of the upper end portion 5a of the boot 5 is slid on the outer periphery of the shaft 12, as the ball stud 4 is pivoted about the round head 11. Further, the first sliding contact surface 32 of the upper end portion 5a of the boot 5 is slid on the outer periphery of the shaft 12, as the ball stud 4 is rotated about the center axis of the shaft 12.

FIG. 3 is a diagram of the knuckle arm 51 as seen in an arrow direction III in FIG. 2. As shown in FIGS. 1 to 3, a grease retaining groove 55 (a hatched portion in FIG. 3) serving as a grease retaining portion for retaining grease G is provided in a portion of the lower surface 52b opposed to the second sliding contact surface 33. The grease retaining groove 55 surrounds an opening 56 of the knuckle hole 53, and has an annular shape coaxial with the peripheral wall 54 of the round opening 56 of the knuckle hole 53. The grease retaining groove 55 has an inverted semicircular cross section taken perpendicularly to an extending direction thereof as shown in FIG. 2. The inner peripheral edge of the grease retaining grove 55 is spaced a predetermined distance S from the peripheral wall 54 of the opening 56. The grease retaining groove 55 is formed, for example, by grinding or cutting the portion of the lower surface 52b around the opening 56 of the knuckle hole 53.

In the state shown in FIG. 1, the second sliding contact surface 33 is kept in contact with the lower surface 52b, so that the grease G retained in the grease retaining groove 55 is supplied to the second sliding surface 33. FIG. 3 illustrates a state in which the grease G is not retained in the grease retaining groove 55.

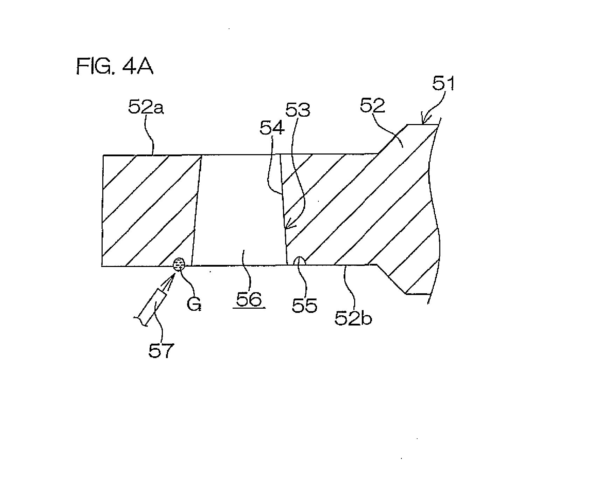

FIGS. 4A and 4B are sectional views for explaining an exemplary mounting method for mounting the ball joint 1 on the knuckle arm 51.

The mounting method shown in FIGS. 4A and 4B includes a grease putting step, a shaft inserting step and a shaft fixing step, which are performed in this order. That is, the grease G is put (retained) in the grease retaining groove 55 before the shaft 12 of the ball stud 4 is inserted into the knuckle hole 53. The grease G retained in the grease retaining groove 55 may be of the same type (having the same viscosity) as the grease filled between the round head 11 and the resin sheet 3.

In the grease putting step, as shown in FIG. 4A, the grease G is ejected from a grease ejecting nozzle 57 toward the grease retaining groove 55 to be thereby retained in the grease retaining groove 55. In the grease putting step, a workpiece (the bracket 52 of the knuckle arm 51) or the nozzle 57 is rotated about the knuckle hole 53. Thus, the grease G can be retained in the entire grease retaining groove 55. At this time, the grease retaining groove 55 is preferably fully filled with the grease G. That is, the grease G is preferably retained in the grease retaining groove 55 in an amount such that the grease G is just about to flow out of the grease retaining groove 55. The grease G is semisolid at ordinary temperatures, and has substantially no fluidity. Therefore, the grease G supplied into the grease retaining groove 55 hardly flows out of the grease retaining groove 55. That is, the grease G is not present on a portion of the lower surface 52b adjacent to the opening 56 of the knuckle hole 53.

After the grease putting step, the shaft inserting step is performed. That is, the shaft 12 of the ball stud 4 is inserted into the knuckle hole 53.

As shown in FIG. 4B, the annular projection 34 is provided along the outer periphery of the second sliding contact surface 33 as projecting away from the housing 2 in a state before the shaft inserting step (i.e., before the mounting of the ball stud 4). The annular projection 34 has a triangular cross section taken perpendicularly to the circumference thereof, and the outward projection degree of the annular projection 34 increases in an upward direction. A portion of the second sliding contact surface 33 excluding the outer periphery is generally flat. As shown in FIG. 4B, the grease retaining groove 55 is opposed to the second sliding contact surface 33.

The shaft 12 of the ball stud 4 is inserted into the knuckle hole 53 to be squeezed into the inner side of the knuckle hole 53. At this time, the grease G is not present on the portion of the lower surface 52b adjacent to the opening 56 of the knuckle hole 53. Therefore, the grease G is not drawn into the knuckle hole 53 by the insertion of the shaft 12 in the knuckle hole 53. Then, the upper end portion 5a is brought into contact with the lower surface 52b by the insertion of the shaft 12. After the contact between the upper end portion 5a and the lower surface 52b, the grease G is spread between the upper end portion 5a and the lower surface 52b to reach the outer periphery of the shaft 12 (as indicated by a bold line in FIG. 2).

After the ball stud 4 is sufficiently squeezed into the knuckle hole 53, the shaft fixing step is performed. More specifically, the male thread portion 31 projects rearward (upward in FIG. 4B) from the bracket 52 with the shaft 12 of the ball stud 4 sufficiently squeezed in the knuckle hole 53. A nut 30 (see FIG. 1) is threadingly engaged with the male thread portion 31 to be tightened, whereby the ball stud 4 is fixed to the knuckle arm 51. Thus, the ball joint 1 is fixed to the knuckle arm 51 to be thereby mounted on the knuckle arm 51.

In use of the ball joint 1, the upper end portion 5a is slid on the outer periphery of the shaft 12 of the ball stud 4 as the ball stud 4 is pivoted and rotated. Thus, the grease G reaching the outer periphery of the shaft 12 is distributed (infiltrates) between the first sliding contact surface 32 of the upper end portion 5a and the outer periphery of the shaft 12.

On the other hand, the ball stud 4 is not relatively displaced with respect to the knuckle arm 51, so that the grease G reaching the outer periphery of the shaft 12 is hardly supplied between the peripheral wall 54 of the knuckle hole 53 and the outer periphery of the shaft 12. This makes it possible to distribute the grease G between the outer periphery of the shaft 12 and the first sliding contact surface 32 of the upper end portion 5a, while preventing the grease G from being supplied into the knuckle hole 53.

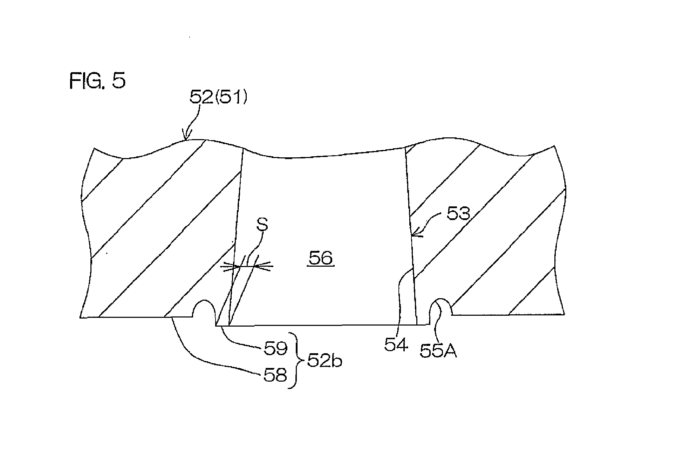

Another example of the grease retaining groove is a grease retaining groove 55A shown in FIG. 5. More specifically, the lower surface 52b includes a first annular portion 58 provided around the opening 56 of the knuckle hole 53 and having an annular shape, and a second annular portion 59 surrounding the first annular portion 58 and having an annular shape. The first annular portion 58 is indented from the second annular portion 59. The grease retaining groove 55A is disposed along a boundary between the first and second annular portions 58 and 59. The grease retaining groove 55A has substantially the same structure as the grease retaining groove 55. In this example, a level difference between the bottom of the grease retaining groove 55A and the first annular portion 58 is different from a level difference between the bottom of the grease retaining groove 55A and the second annular portion 59. Therefore, the grease G retained in the grease retaining groove 55A is guided toward the second annular portion 59 rather than toward the first annular portion 58. Therefore, the grease G is reliably prevented from being supplied into the knuckle hole 53.

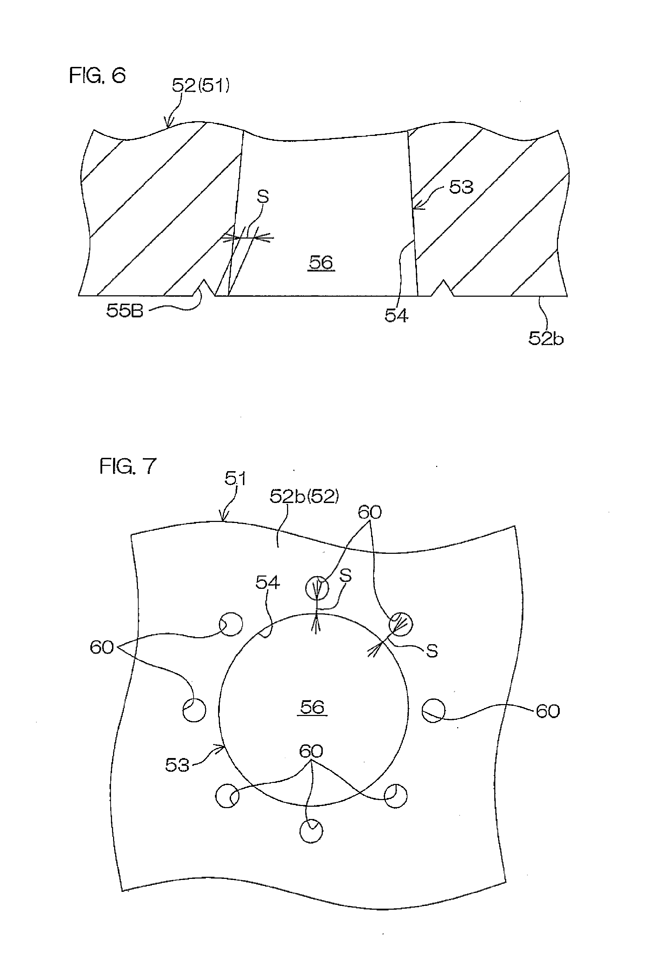

Further another example of the grease retaining groove 55A is a grease retaining groove 55B shown in FIG. 6. Unlike the grease retaining grooves 55 and 55A, the grease retaining groove 55B is a V-shaped annular groove (having a V-shaped cross section taken perpendicularly to a groove extending direction).

The embodiment described above is directed to the case in which the grease retaining groove 55, 55A or 55B is provided as the grease retaining portion. Alternatively, as shown in FIG. 7, a plurality of grease retaining recesses 60 (eight grease retaining recesses in FIG. 7) may be provided as the grease retaining portion. The grease retaining recesses 60 are equidistantly arranged along a circle coaxial with the peripheral wall 54 of the round opening 56 of the knuckle hole 53. The grease retaining recesses 60 each have, for example, a generally semispherical shape.

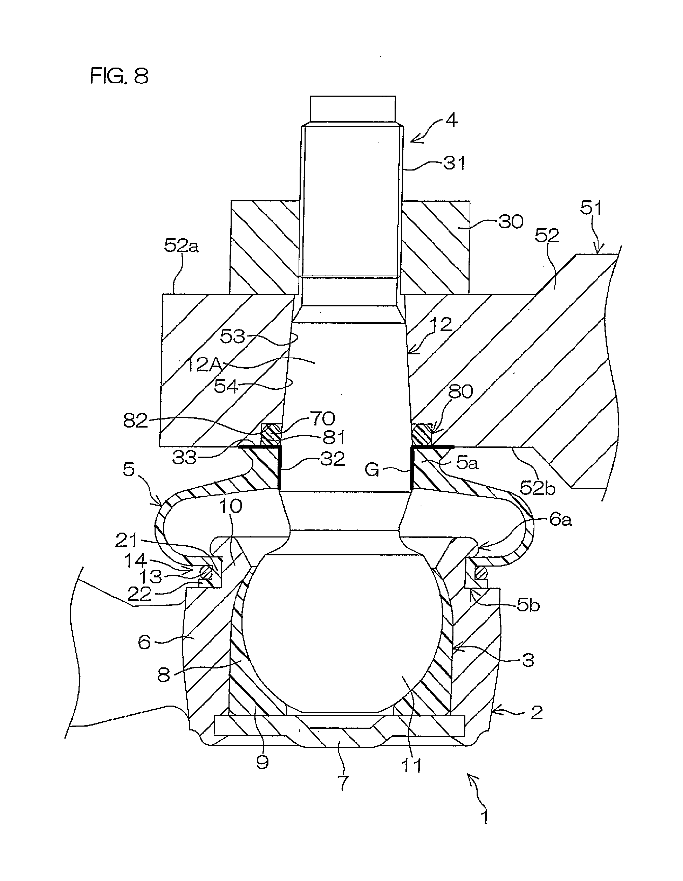

FIG. 8 is a diagram showing the major structures of a ball joint 1 and a knuckle arm 51 of a ball joint mount structure according to further another embodiment of the present invention. FIG. 8 illustrates a state after the ball joint 1 is mounted on the knuckle arm 51. The mount structure according to this embodiment is such that a ball joint 1 provided in a connection portion between a knuckle arm 51 of a suspension system and a steering system is mounted on the knuckle arm 51 (mount member). The ball joint 1 supports the knuckle arm 51 in a vertically movable and turnable manner.

The knuckle arm 51 includes a knuckle body (not shown) such as of aluminum, and a bracket 52 of aluminum connected to a lower portion of the knuckle body. The bracket 52 has a knuckle hole (mount hole) 53 provided at a mount position in a planar portion thereof (mount portion, which is one end portion (right end portion in FIG. 8) in this embodiment) as extending from an upper surface 52a to a lower surface 52b thereof. In other words, the knuckle hole 53 opens in the lower surface (mount surface) 52b. The knuckle hole 53 is an insertion hole though which a ball stud shaft 12 is inserted, and has a generally cylindrical peripheral wall (interior wall) 54. The peripheral wall 54 of the knuckle hole 53 has a taper shape which has a diameter increasing toward a lower end thereof.

The ball joint 1 includes a tubular housing 2, a resin sheet 3 and a ball stud 4 retained in the housing 2, and a tubular boot 5 attached to the housing 2. The housing 2 includes a tubular member 6 in which the resin sheet 3 is disposed, and a plug plate 7 fixed to a lower end of the tubular member 6 to close the lower end of the tubular member 6. The tubular member 6 has an upper end portion which is defined as an open end portion 6a.

The resin sheet 3 has a cup shape, and includes a tubular peripheral wall portion 8 and a bottom portion 9 provided at a lower end of the peripheral wall portion 8. The resin sheet 3 is disposed with its peripheral wall portion 8 fitted on an inner peripheral surface of the tubular member 6 and with its bottom portion 9 opposed to the plug plate 7. The resin sheet 3 is held between an annular flange 10 provided at the open end portion 6a and the plug plate 7. The flange 10 has an inner diameter that is smaller than the outer diameter of a part (a round head 11 to be described later) of the ball stud 4. Therefore, the open end portion 6a prevents the part of the ball stud 4 and the resin sheet 3 from being withdrawn from the tubular member 6.

The ball stud 4 is a metal member which integrally includes a round head 11 having a spherical outer peripheral surface and a shaft 12 projecting upward from the round head 11. The round head 11 is disposed with its center aligning on a center axis of the shaft 12. The shaft 12 has a male thread portion 31 provided at a distal end thereof. The shaft 12 includes a generally cylindrical trunk portion 12A provided between the male thread portion 31 and the round head 11 thereof. With the ball joint 1 mounted on the knuckle arm 51, the trunk portion 12A is accommodated in the knuckle hole 53. Therefore, the trunk portion 12A has an outer periphery configured and dimensioned so as to be conformal to the peripheral wall 54 of the knuckle hole 53. In other words, the outer periphery of the trunk portion 12A has a taper shape which has a diameter increasing toward a lower end thereof.

The resin sheet 3 has an inner peripheral surface conformal to the outer peripheral surface of the round head 11. Grease is filled between the resin sheet 3 and the round head 11. The round head 11 is slidable with respect to the resin sheet 3. The ball stud 4 is pivotal about the round head 11 with respect to the housing 2. The ball stud 4 is rotatable about the center axis of the shaft 12.

The boot 5 is configured in a tubular shape such that an upper end portion (one end, lip) 5a thereof has a smaller diameter than a lower end portion (the other end) 5b thereof, and an intermediate portion thereof is bulged outward from the lower end portion 5b. The boot 5 is made of a resilient material (e.g., a chloroprene rubber (CR), an acrylonitrile butadiene rubber (NBR), a natural rubber or the like). The upper end portion 5a of the boot 5 is fitted around an intermediate portion of the shaft 12 in resilient contact with the outer periphery of the trunk 12A (the outer periphery of the shaft 12). In a state shown in FIG. 8, the upper end portion 5a of the boot 5 also contacts the lower surface 52b. The lower end portion 5b of the boot 5 is fitted around the open end portion 6a of the tubular member 6.

The lower end portion 5b of the boot 5 is fixed to the tubular member 6 by a fixture ring 13 attached to the lower end portion 5b. More specifically, the housing 2 has an annular groove 14 circumferentially provided in an outer periphery of the open end portion 6a thereof for attachment of the boot. An opening defined within the open end portion 6a is covered with the boot 5, whereby foreign matter such as water and dust is prevented from intruding into the ball joint 1.

The lower end portion 5b of the boot 5 is inserted in the annular groove 14. The lower end portion 5b includes a cylindrical portion 21, and an annular turn-back portion 22 turned back from a distal edge of the cylindrical portion 21 as extending outward. The cylindrical portion 21 has an axial length that is substantially equal to the width of the annular groove 14, and is disposed in the annular groove 14 with its inner peripheral surface in intimate contact with a bottom of the annular groove 14. The fixture ring 13 is a resilient member, for example, having a C-shape as seen in plan. The fixture ring 13 is fitted around the cylindrical portion 21 in the annular groove 14 to clamp the cylindrical portion 21 from the outer side to fix the cylindrical portion 21 to the tubular member 6.

The upper end portion 5a of the boot 5 is generally cylindrical. The upper end portion 5a has a generally cylindrical first sliding contact surface 32 kept in sliding contact with the outer periphery of the trunk portion 12A, and an annular second sliding contact surface 33 kept in sliding contact with the lower surface 52b in the state shown in FIG. 8. The first sliding contact surface 32 is entirely kept in sliding contact with the outer periphery of the trunk portion 12A.

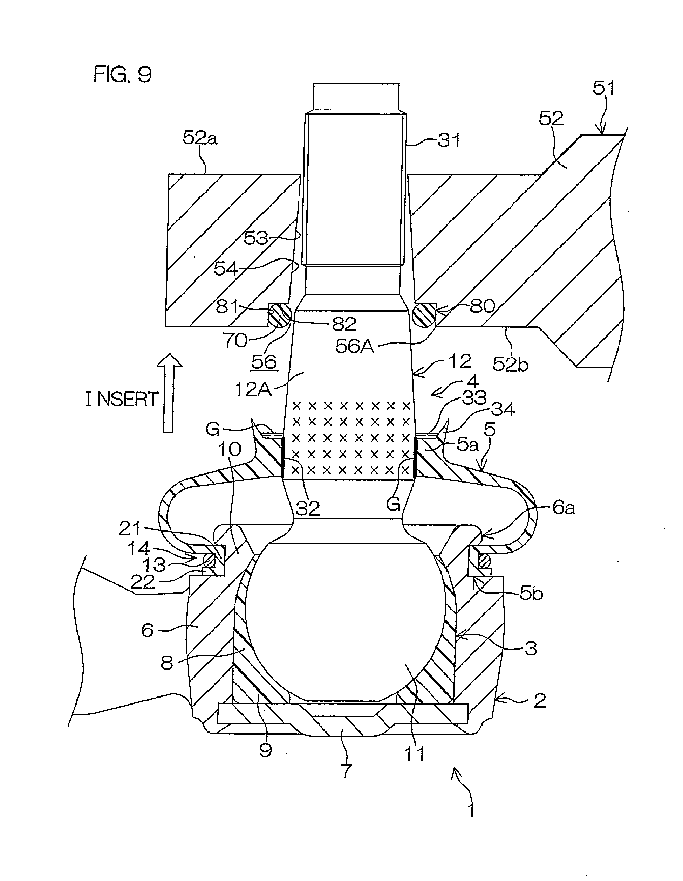

The second sliding contact surface 33 defines an upper end face of the upper end portion 5a. The second sliding contact surface 33 is continuous to the first sliding contact surface 32, and generally perpendicular to the first sliding contact surface 32. With the ball joint 1 mounted on the knuckle arm 51 as shown in FIG. 8, the second sliding contact surface 33 is pressed against the lower surface 52b to be deformed. More specifically, as shown in FIG. 9 to be described later, the second sliding contact surface 33 includes an annular projection 34 provided along an outer periphery thereof as projecting away from the housing 2. In the state shown in FIG. 8, the annular projection 34 kept in contact with the lower surface 52b is pressed against the lower surface 52b to project outward (see FIG. 9, though the annular projection 34 is not shown in FIG. 8).

The first sliding contact surface 32 of the upper end portion 5a of the boot 5 is slid on the outer periphery of the trunk portion 12A, as the ball stud 4 is pivoted about the round head 11. Further, the first sliding contact surface 32 of the upper end portion 5a of the boot 5 is slid on the outer periphery of the trunk portion 12A, as the ball stud 4 is rotated about the center axis of the shaft 12.

An annular step (step) 80 is provided in the peripheral wall 54 of the open end portion 56A (opening 56) of the knuckle hole 53 to be continuous to the lower surface 52b. An annular seal member 70 is accommodated in the annular step 80 in contact with the outer periphery of the trunk portion 12A for sealing a gap between the outer periphery of the trunk portion 12A and the peripheral wall 54. The seal member 70 is accommodated in the annular step 80 in intimate contact with an outer peripheral wall 81 and an annular wall 82 of the annular step 80.

An example of the seal member 70 is an O-ring. The seal member 70 may have, for example, a round sectional shape, as shown in FIGS. 8 and 9, or an oval sectional shape taken perpendicularly to the circumference thereof. Exemplary materials for the seal member 70 include a nitrile rubber and a silicone rubber. The annular step 80 is formed, for example, by grinding or cutting a portion of the peripheral wall 54 of the opening 56 of the knuckle hole 53 (the lowermost portion of the peripheral wall 54).

FIG. 9 is a sectional view for explaining an exemplary mounting method for mounting the ball joint 1 on the knuckle arm 51.

The mounting method for mounting the ball joint 1 on the knuckle arm 51 includes a shaft inserting step and a shaft fixing step, which are performed in this order. Before inserting the shaft 12 of the ball stud 4 into the knuckle hole 53, an operator applies the grease G onto at least one of the first sliding contact surface 32 and the outer periphery of the trunk portion 12A (more specifically, a portion of the outer periphery of the trunk portion 12A opposed to the first sliding contact surface 32). Since the grease G is present between the first sliding contact surface 32 and the outer periphery of the trunk portion 12A (the portion of the outer periphery of the trunk portion 12A opposed to the first sliding contact surface 32), lubrication between the outer periphery of the trunk portion 12A and the upper end portion 5a is enhanced. As shown in FIG. 9, the application of the grease G onto the second sliding contact surface 33 may be simultaneous with the application of the grease G onto one of the first sliding contact surface 32 and the outer periphery of the trunk portion 12A. In FIG. 9, the portion of the outer periphery of the trunk portion 12A of the shaft 12 retaining the applied grease G is indicated by characters "x". The grease G applied onto the sliding contact surfaces 32, 33 and the outer periphery of the shaft 12 may be of the same type (having the same viscosity) as the grease filled between the round head 11 and the resin sheet 3.

Next, the shaft inserting step will be described. In the shaft inserting step, the shaft 12 of the ball stud 4 is inserted into the knuckle hole 53.

In a state before the shaft inserting step (i.e., before the mounting of the ball stud 4), as shown in FIG. 9, the annular projection 34 is provided along the outer periphery of the second sliding contact surface 33 as projecting away from the housing 2. The annular projection 34 has a triangular cross section taken perpendicularly to the circumference thereof, and the outward projection degree of the annular projection 34 increases in an upward direction. A portion of the second sliding contact surface 33 excluding the outer periphery is generally flat.

In the state before the shaft inserting step, the inner periphery of the seal member 70 slightly projects radially inward of the peripheral wall 54.

The shaft 12 of the ball stud 4 is inserted into the knuckle hole 53 to be squeezed into the inner side of the knuckle hole 53. At this time, the seal member 70 is brought into contact with the outer periphery of the trunk 12A of the shaft 12 to scrape the grease G adhering to the outer periphery of the trunk 12A. Therefore, the grease G adhering to the outer periphery of the trunk 12A is hardly drawn into the knuckle hole 53.

After the ball stud 4 is sufficiently squeezed into the knuckle hole 53, the shaft fixing step is performed. More specifically, the male thread portion 31 projects rearward (upward in FIG. 9) from the bracket 52 with the shaft 12 of the ball stud 4 sufficiently squeezed in the knuckle hole 53. A nut 30 (see FIG. 8) is threadingly engaged with the male thread portion 31 to be tightened, whereby the ball stud 4 is fixed to the knuckle arm 51. Thus, the ball joint 1 is fixed to the knuckle arm 51 to be thereby mounted on the knuckle arm 51.

After the mounting of the ball joint 1, the seal member 70 is kept in contact with the outer periphery of the trunk 12A to seal the gap between the outer periphery of the trunk 12A and the peripheral wall 54 of the opening 56 of the knuckle hole 53. This prevents the grease G from intruding into the knuckle hole 53. Thus, the grease G is prevented from being supplied into the knuckle hole 53, even if the grease G is applied onto at least one of the first sliding contact surface 32 and the outer periphery of the trunk 12A before the mounting of the ball joint 1.

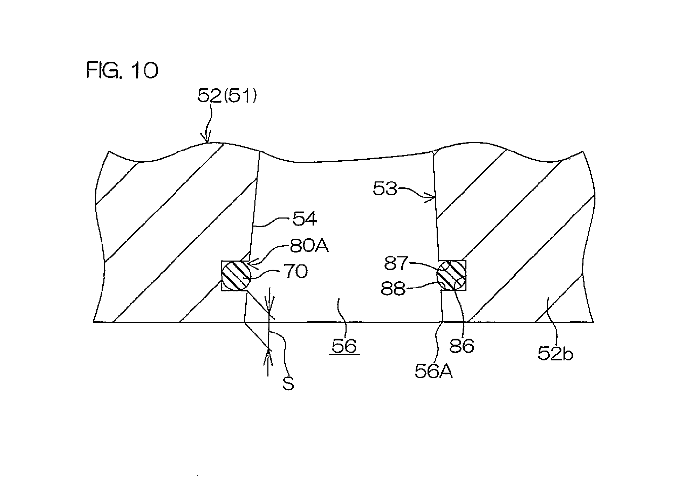

FIG. 10 is a major sectional view of a knuckle arm of a ball joint mount structure according to still another embodiment of the present invention. In FIG. 10, components corresponding to those shown in FIGS. 8 and 9 will be designated by the same reference characters as in FIGS. 8 and 9, and duplicate description will be omitted.

The mount structure shown in FIG. 10 differs from the mount structure shown in FIGS. 8 and 9 in that an annular groove 80A is provided in the peripheral wall 54 of the opening 56 of the knuckle hole 53 and a seal member 70 is accommodated in the annular groove 80A. More specifically, the annular groove 80A has a rectangular cross section taken perpendicularly to the circumference thereof. The annular groove 80A is provided in the peripheral wall 54 of the knuckle hole 53 as spaced a predetermined distance S inward from an open end portion 56A of the knuckle hole 53. The seal member 70 is accommodated in the annular groove 80A in intimate contact with a bottom wall 86 and opposite side walls 87, 88 of the annular groove 80A. In a state shown in FIG. 10, the inner periphery of the seal member 70 slightly projects radially inward from a line extending between an inner edge of the side wall 87 and an inner edge of the side wall 88.

While the embodiments of the present invention have thus been described, the invention is not limited to these embodiments, but various modifications may be made within the scope of the present invention.

The embodiments described above are directed to the case in which the ball joint 1 is mounted on the knuckle arm 51 of the suspension system. The inventive mount structure is applicable to a mount structure including a ball joint 1 mounted on a knuckle arm of a steering system.

It should be noted that various design modifications may be made within the scope of the present invention defined by the following claims.

## Claims

1. A ball joint mount structure comprising:
a ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof; and
a mount member (51) having a mount surface (52b) and a mount hole (53) opening in the mount surface;
the ball joint being mounted on the mount member with the shaft inserted in the mount hole and engaged with the mount member;
the boot including an annular lip (5a) provided at the one end thereof with an inner peripheral surface (32) of the lip in contact with an outer periphery of the shaft and with one end face (33) of the lip in contact with the mount surface;
the mount member including a grease retaining portion (55; 55A; 55B; 60) provided in a portion of the mount surface thereof spaced a distance (S) from a peripheral edge of the mount hole as opposed to the one end face of the lip for retaining grease (G).

2. The ball joint mount structure according to claim 1, wherein the grease retaining portion includes an annular groove (55; 55A; 55B) surrounding the mount hole.

3. The ball joint mount structure according to claims 1 or 2, wherein the grease retaining portion includes a plurality of recesses (60) provided around the mount hole.

4. A ball joint mounting method for mounting a ball joint (1) on a mount member (51), the ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof to cover the opening, the boot including a lip (5a) provided at the one end thereof in resilient contact with an outer periphery of the shaft, the mount member (51) having a mount surface (52b) and a mount hole (53) opening in the mount surface, the method comprising:
a grease putting step of putting grease (G) in a grease retaining portion (55; 55A; 55B; 60) provided in a portion of the mount surface spaced a distance (S) from a peripheral edge of the mount hole;
a shaft inserting step of inserting the shaft into the mount hole to bring the lip into contact with the mount surface after the grease putting step; and
a shaft fixing step of fixing the shaft inserted into the mount hole to the mount member after the shaft inserting step.

5. A ball joint mount structure comprising:
a ball joint (1) including a ball stud (4) having a shaft (12) and a round head (11) provided at one end of the shaft, a housing (2) having an opening and accommodating the round head therein with the shaft projecting from the opening, and a tubular boot (5) fitted around an intermediate portion of the shaft at one (5a) of opposite ends thereof and fitted around the housing at the other end (5b) thereof; and
a mount member (51) having a mount surface (52b) and a mount hole (53) opening in the mount surface;
the ball joint being mounted on the mount member with the shaft inserted in the mount hole and engaged with the mount member;
the boot including an annular lip (5a) provided at the one end thereof with an inner peripheral surface (32) of the lip in contact with an outer periphery of the shaft and with one end face (33) of the lip in contact with the mount surface;
wherein grease (G) is supplied between the inner peripheral surface of the lip and the outer periphery of the shaft, and an annular seal member (70) is provided in an interior wall (54) of an opening (56) of the mount hole in contact with the outer periphery of the shaft for suppressing intrusion of the grease.

6. The ball joint mount structure according to claim 5, wherein a step (80) is provided in the interior wall of the opening of the mount hole to accommodate the seal member.

7. The ball joint mount structure according to claims 5 or 6, wherein an annular groove (80A) is provided in the interior wall of the opening of the mount hole to accommodate the seal member.

8. The ball joint mount structure according to any one of claims 5 to 7, wherein the grease is supplied between the one end face of the lip and the mount surface.
